# EUROPÄISCHE PATENTANMELDUNG

(11) **EP 2 014 900 A1**
(43) Veröffentlichungstag der Anmeldung: **14.01.2009**
(21) Anmeldenummer: 08104312.7
(22) Anmeldetag: 09.06.2008
(51) Int. Cl.: F02D 41/22

(54) **Verfahren zum Betreiben eines Kraftstoffeinspritzsystems, insbesondere einer Brennkraftmaschine**

(30) Priorität: 12.07.2007 DE 102007032509
(71) Anmelder: Robert Bosch GmbH, 70442 Stuttgart (DE)
(72) Erfinder: Sommerer, Andreas, 71394 Kernen (DE)

(57) **Zusammenfassung**

Die Erfindung betrifft ein Verfahren zum Betreiben eines Kraftstoffeinspritzsystems (100), insbesondere einer Brennkraftmaschine, bei dem in einem Druckspeicher (110) gespeicherter Kraftstoff von mindestens einem Einspritzventil (120) eingespritzt wird.

Erfindungsgemäß wird mindestens eine von dem in dem Druckspeicher (110) herrschenden Kraftstoffdruck abhängige Betriebsgröße (Δt) des Einspritzventils (120) ausgewertet, um auf den Kraftstoffdruck zu schließen.

## Beschreibung

### Stand der Technik

Die Erfindung betrifft ein Verfahren zum Betreiben eines Kraftstoffeinspritzsystems, insbesondere einer Brennkraftmaschine, bei dem in einem Druckspeicher gespeicherter Kraftstoff von mindestens einem Einspritzventil eingespritzt wird.

Die Erfindung betrifft ferner ein Computerprogramm zur Ausführung eines derartigen Verfahrens sowie ein Steuergerät für ein Kraftstoffeinspritzsystem.

Verfahren der eingangs genannten Art sind bekannt und weisen den Nachteil auf, dass Ungenauigkeiten bei einer Erfassung des Kraftstoffdrucks in dem Druckspeicher zu Fehlern bei der Einstellung eines Solldrucks für den Kraftstoffdruck führen, die wiederum eine Reduktion der Haltbarkeit der Komponenten des Kraftstoffeinspritzsystems sowie Fehler bei einer Gemischbildung hervorrufen.

### Offenbarung der Erfindung

Demgemäß ist es Aufgabe der vorliegenden Erfindung, ein Verfahren der eingangs genannten Art dahingehend zu verbessern, dass eine größere Betriebssicherheit erzielt wird und die beschriebenen Nachteile vermieden werden.

Diese Aufgabe wird bei einem Verfahren der eingangs genannten Art erfindungsgemäß dadurch gelöst, dass mindestens eine von dem in dem Druckspeicher herrschenden Kraftstoffdruck abhängige Betriebsgröße des Einspritzventils ausgewertet wird, um auf den Kraftstoffdruck zu schließen.

Erfindungsgemäß ist erkannt worden, dass bei herkömmlichen Einspritzventilen eine oder auch mehrere Betriebsgrößen wie beispielsweise Schaltzeiten, sonstige, das dynamische Verhalten betreffende Größen und der dergleichen, von einem Kraftstoffdruck im Bereich des Einspritzventils abhängig sind und damit auch Informationen über einen in dem Druckspeicher herrschenden Kraftstoffdruck enthalten.

Eine entsprechende Auswertung der von dem Kraftstoffdruck abhängigen Betriebsgrößen ermöglicht daher vorteilhaft Rückschlüsse auf den tatsächlich in dem Druckspeicher herrschenden Kraftstoffdruck.

Eine gesteigerte Betriebssicherheit des erfindungsgemäßen Kraftstoffeinspritzsystems ist vorteilhaft gegeben, wenn ein mittels eines Drucksensors ermittelter Kraftstoffdruck durch den erfindungsgemäß in Abhängigkeit mindestens einer Betriebsgröße eines Einspritzventils erhaltenen Kraftstoffdruck plausibilisiert wird.

Bei einer negativen Plausibilisierung kann vorteilhaft vorgesehen sein, auf einen Fehler des Drucksensors zu schließen und/oder eine Fehlerreaktion einzuleiten.

Sofern mehrere Einspritzventile bei dem Kraftstoffeinspritzsystem vorgesehen sind, kann vorteilhaft für mehrere Einspritzventile jeweils mindestens eine von dem in dem Druckspeicher herrschenden Kraftstoffdruck abhängige Betriebsgröße ausgewertet werden, wobei weitere Möglichkeiten zur gegenseitigen Plausibilisierung der hieraus ermittelten Druckwerte gegeben sind.

Ganz besonders vorteilhaft kann aus einer vergleichbaren Abweichung der Betriebsgrößen mehrerer unterschiedlicher Einspritzventile von vorgebbaren Referenzdaten auf eine Manipulation einer Komponente des Kraftstoffeinspritzsystems, insbesondere auf eine Manipulation des Drucksensors geschlossen werden.

Wenn das Einspritzventil als Magnetventil ausgebildet ist, kann erfindungsgemäß vorteilhaft eine Schaltzeit des Magnetventils als eine von dem in dem Druckspeicher herrschenden Kraftstoffdruck abhängige Betriebsgröße ausgewertet werden.

Vorteilhaft wird eine Ansteuergröße des Einspritzventils beziehungsweise eines darin vorgesehenen Aktors ausgewertet, um die Betriebsgröße zu ermitteln.

Dementsprechend kann bei einem als Magnetventil ausgebildeten Einspritzventil eine Ansteuerspannung beziehungsweise ein Ansteuerstrom ausgewertet werden, um die Betriebsgröße zu ermitteln, während bei einem mit einem piezoelektrischen Aktor versehenen Einspritzventil bevorzugt die Ansteuerspannung des Aktors ausgewertet wird, um die Betriebsgröße zu ermitteln.

Von besonderer Bedeutung ist die Realisierung des erfindungsgemäßen Verfahrens in Form eines Computerprogramms, das zur Ausführung des Verfahrens programmiert und auf einem elektronischen Speichermedium vorgesehen ist.

Weitere Vorteile, Merkmale und Einzelheiten ergeben sich aus der nachfolgenden Beschreibung, in der unter Bezugnahme auf die Zeichnung verschiedene Ausführungsbeispiele der Erfindung dargestellt sind. Dabei können die in den Ansprüchen und in der Beschreibung erwähnten Merkmale jeweils einzeln für sich oder in beliebiger Kombination erfindungswesentlich sein.

### Kurze Beschreibung der Zeichnung

In der Zeichnung zeigt:
- Figur 1: ein Blockschaltbild einer Ausführungsform des erfindungsgemäßen Kraftstoffeinspritzsystems;
- Figur 2: ein vereinfachtes Flussdiagramm einer Ausführungsform des erfindungsgemäßen Betriebsverfahrens; und
- Figur 3: eine erfindungsgemäß erhaltene Betriebsgröße von Einspritzventilen einer Brennkraftmaschine.

### Ausführungsformen der Erfindung

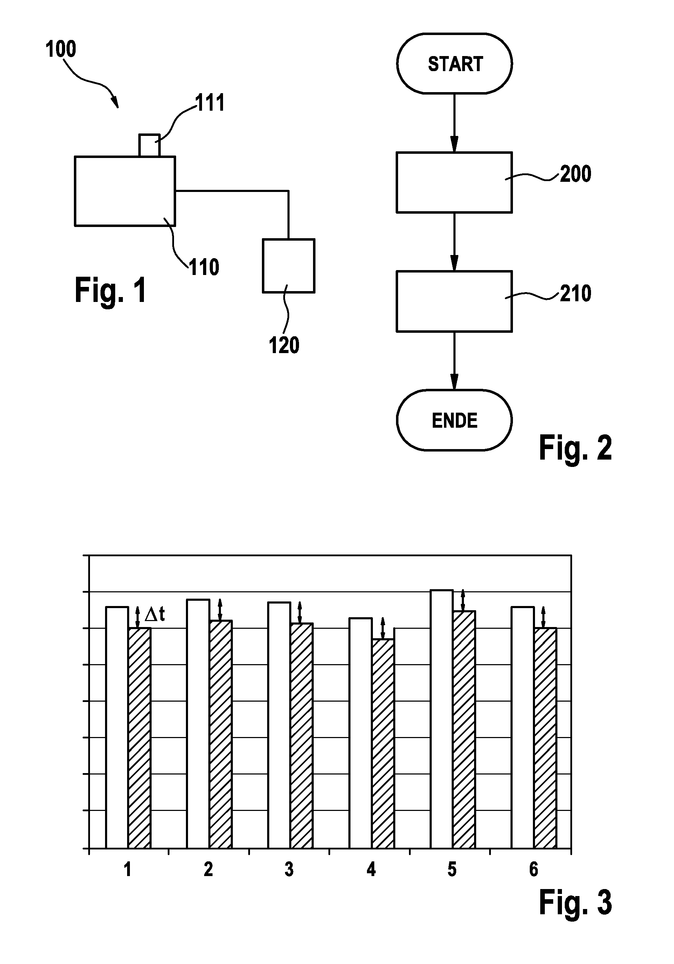

Figur 1 zeigt ein schematisches Blockdiagramm eines erfindungsgemäßen Kraftstoffeinspritzsystems 100, das einen Druckspeicher 110 zur Speicherung von unter Druck stehendem Kraftstoff aufweist. Das Kraftstoffeinspritzsystem 100 verfügt über mindestens ein an den Druckspeicher 110 angeschlossenes Einspritzventil 120, über das von dem Druckspeicher 110 bereitgestellter Kraftstoff beispielsweise in einen Brennraum einer nicht abgebildeten Brennkraftmaschine eingespritzt werden kann.

Dem Druckspeicher 110 ist ein Drucksensor 111 zugeordnet, der zur Erfassung des in dem Druckspeicher 110 herrschenden Kraftstoffdrucks dient.

Um auch bei einer Fehlfunktion des Drucksensors 111 Informationen über den Kraftstoffdruck in dem Druckspeicher 110 zu erhalten, wird das nachfolgend unter Bezugnahme auf Figur 2 beschriebene erfindungsgemäße Verfahren ausgeführt.

In einem ersten Schritt 200 des erfindungsgemäßen Verfahrens wird mindestens eine von dem in dem Druckspeicher 110 (Figur 1) herrschenden Kraftstoffdruck abhängige Betriebsgröße des Einspritzventils 120 ausgewertet, wodurch vorteilhaft auf den Kraftstoffdruck in dem Druckspeicher 110 geschlossen werden kann. Das heißt, die erfindungsgemäße Auswertung der betreffenden Betriebsgröße des Einspritzventils 120 ermöglicht eine Ermittlung des Kraftstoffdrucks in dem Druckspeicher 110 unabhängig von dem Drucksensor 111 und damit unabhängig von dessen ordnungsgemäßer Funktion.

Damit ist es einerseits vorteilhaft möglich, bei einer Fehlfunktion des Drucksensors 111 Informationen über einen tatsächlich in dem Druckspeicher 110 herrschenden Kraftstoffdruck zu erhalten, und andererseits kann vorteilhaft auch ein von dem Drucksensor 111 erhaltenes Drucksignal mit demjenigen Drucksignal plausibilisiert werden, das erfindungsgemäß in Abhängigkeit der Betriebsgröße des Einspritzventils 120 erhalten wird.

Eine derartige Auswertung beziehungsweise Plausibilisierung findet erfindungsgemäß in dem nachfolgenden Verfahrensschritt 210 (Figur 2) statt.

Bei einer negativen Plausibilisierung des direkt von dem Drucksensor 111 erhaltenen Drucksignalwerts mit einem erfindungsgemäß erhaltenen Drucksignalwert kann beispielsweise auf einen Fehler des Drucksensors 111 geschlossen werden und/oder eine entsprechende Fehlerreaktion eingeleitet werden.

Sofern das Kraftstoffeinspritzsystem 100 (Figur 1) über mehrere Einspritzventile 120 verfügt, kann dem erfindungsgemäßen Prinzip zufolge auch für jedes der mehreren Einspritzventile 120 jeweils mindestens eine von dem in dem Druckspeicher 110 herrschenden Kraftstoffdruck abhängige Betriebsgröße ausgewertet werden, wodurch eine Plausibilisierung der auf diese Weise erhaltenen Werte für die unterschiedlichen Einspritzventile 120 ermöglicht ist.

Wenn die erfindungsgemäß für jedes der mehreren Einspritzventile 120 ausgewerteten Betriebsgrößen jeweils eine vergleichbare Abweichung von vorgebbaren Referenzdaten aufweisen und die aus den Betriebsgrößen abgeleiteten Druckwerte darüber hinaus auch von dem Drucksignal des Drucksensors 111 abweichen, kann vorteilhaft auf eine Manipulation einer Komponente des Kraftstoffeinspritzsystems 100, insbesondere auf eine Manipulation des Drucksensors 111 selbst, geschlossen werden.

Als Referenzdaten können beispielsweise die messtechnisch erfassten Betriebsgrößen neuer Einspritzventile herangezogen werden, die unter bekanntem Kraftstoffdruck ermittelt worden sind.

Bei einer Ausbildung des Einspritzventils 120 als Magnetventil kann vorteilhaft beispielsweise eine Schaltzeit des Magnetventils als eine von dem in dem Druckspeicher 110 herrschenden Kraftstoffdruck abhängige Betriebsgröße ausgewertet werden. Die Schaltzeit kann beispielsweise angeben, wie lange das Umschalten des Magnetventils von einer ersten Betriebsposition zu einer zweiten Betriebsposition bei gegebenen Kraftstoffdruck dauert.

Figur 3 zeigt in diesem Zusammenhang die für sechs Einspritzventile des Kraftstoffeinspritzsystems 100 ermittelten Schaltzeiten, wobei jeweils ein linker, dem betreffenden Einspritzventil 1, .., 6 zugeordneter Wert die Schaltzeit vor einer Manipulation des Drucksensors 111 wiedergibt, und ein rechter, dem betreffenden Einspritzventil 1, .., 6 zugeordneter Wert die Schaltzeit nach einer Manipulation wiedergibt. Aus dem Diagramm der Figur 3 ist deutlich die gleichartige Veränderung der Schaltzeiten aller sechs Einspritzventile 1, .., 6 des Kraftstoffeinspritzsystems 100 um die Zeitdauer Δt ersichtlich, woraus erfindungsgemäß mit großer Sicherheit auf eine Manipulation des Drucksensors 111 geschlossen werden kann.

Beispielsweise kann eine entsprechende Manipulation des Drucksensors 111 dadurch erfolgen, dass das von ihm an eine Motorsteuerung weitergeleitete Drucksignal derart verfälscht wird, dass stets ein geringerer Kraftstoffdruck angezeigt wird, als tatsächlich in dem Druckspeicher 110 vorhanden ist. In diesem Fall wird die Motorsteuerung versuchen, den Druck wieder auf einen entsprechenden Sollwert einzuregeln, z.B. durch entsprechende Ansteuerung einer den Druckspeicher 110 versorgenden Hochdruckpumpe. Durch die Manipulation des Drucksensors 111 stellt sich somit ein zu hoher Kraftstoffdruck ein, der die um die Zeitdauer Δt kürzeren Schaltzeiten der Magnetventile bedingt. Hieraus wird mittels des erfindungsgemäßen Verfahrens wie vorstehend beschrieben die Manipulation erkannt.

Neben einer Schaltzeit können gegebenenfalls auch weitere geeignete Betriebsgrößen des Einspritzventils 120 zur erfindungsgemäßen Auswertung herangezogen werden.

Insbesondere können bei solchen Einspritzventilen, die piezoelektrische Aktoren aufweisen, deren Ansteuergrößen, wie beispielsweise eine Ansteuerspannung oder auch ein Ansteuerstrom zur erfindungsgemäßen Auswertung herangezogen werden, sofern diese von dem in dem Druckspeicher 110 herrschenden Kraftstoffdruck abhängig sind.

Einerseits ermöglicht die Anwendung des erfindungsgemäßen Verfahrens demnach die Erkennung einer ordnungsgemäßen Funktion des Drucksensors 111 beziehungsweise eine Plausibilisierung der Funktion des Drucksensors 111, und andererseits kann bei einem defekten Drucksensor 111 hilfsweise zumindest der in dem Druckspeicher 110 herrschende Kraftstoffdruck direkt aus den Betriebsgrößen der Einspritzventile 120 ermittelt werden.

Mit Hilfe des erfindungsgemäßen Verfahrens kann somit sichergestellt werden, dass eine das erfindungsgemäße Kraftstoffeinspritzsystem 100 enthaltende Brennkraftmaschine beziehungsweise ein ihr zugeordnetes Steuergerät stets korrekte Informationen über den in dem Druckspeicher 110 herrschenden Kraftstoffdruck erhält, was sich positiv auf eine Lebensdauer der verwendeten Komponenten sowie auf die Qualität der Gemischbildung auswirkt.

Auch die Erkennung vorsätzlich herbeigeführter Manipulationen wie z.B. der Einbau eines sog. "Tuning-kits" zur Leistungssteigerung der Brennkraftmaschine kann durch das erfindungsgemäße Verfahren geleistet werden. Bei einer derartigen Manipulation ergibt sich im Gegensatz zu verschleißbedingten Änderungen der kraftstoffdruckabhängigen Betriebsgrößen eine unmittelbare Veränderung der betreffenden Werte.

## Patentansprüche

1. Verfahren zum Betreiben eines Kraftstoffeinspritzsystems (100), insbesondere einer Brennkraftmaschine, bei dem in einem Druckspeicher (110) gespeicherter Kraftstoff von mindestens einem Einspritzventil (120) eingespritzt wird, **dadurch gekennzeichnet, dass** mindestens eine von dem im Druckspeicher (110) herrschenden Kraftstoffdruck abhängige Betriebsgröße (Δt) des Einspritzventils (120) ausgewertet wird, um auf den Kraftstoffdruck zu schließen.

2. Verfahren nach Anspruch 1 **dadurch gekennzeichnet, dass** ein mittels eines Drucksensors (111) ermittelter Kraftstoffdruck in dem Druckspeicher (110) plausibilisiert wird.

3. Verfahren nach Anspruch 2, **dadurch gekennzeichnet, dass** bei negativer Plausibilisierung auf einen Fehler des Drucksensors (111) geschlossen und/oder eine Fehlerreaktion eingeleitet wird.

4. Verfahren nach einem der vorstehenden Ansprüche, wobei mehrere Einspritzventile (120) vorgesehen sind, **dadurch gekennzeichnet, dass** für mehrere Einspritzventile (120) jeweils mindestens eine von dem in dem Druckspeicher (110) herrschenden Kraftstoffdruck abhängige Betriebsgröße ausgewertet wird.

5. Verfahren nach Anspruch 4, **dadurch gekennzeichnet, dass** aus einer vergleichbaren Abweichung der Betriebsgrößen mehrerer Einspritzventile (120) von vorgebbaren Referenzdaten auf eine Manipulation einer Komponente des Kraftstoffeinspritzsystems (100), insbesondere auf eine Manipulation des Drucksensors (111) geschlossen wird.

6. Verfahren nach einem der vorstehenden Ansprüche, wobei das Einspritzventil (120) als Magnetventil ausgebildet ist, **dadurch gekennzeichnet, dass** eine Schaltzeit des Magnetventils als eine von dem in dem Druckspeicher (110) herrschenden Kraftstoffdruck abhängige Betriebsgröße ausgewertet wird.

7. Verfahren nach einem der vorstehenden Ansprüche, **dadurch gekennzeichnet, dass** eine Ansteuergröße des Einspritzventils (120) beziehungsweise eines darin vorgesehenen Aktors ausgewertet wird, um die Betriebsgröße zu ermitteln.

8. Computerprogramm, **dadurch gekennzeichnet, dass** es zur Ausführung des Verfahrens nach einem der vorstehenden Ansprüche programmiert ist.

9. Elektronisches Speichermedium, auf dem ein Computerprogramm abgespeichert ist, das zur Ausführung des Verfahrens nach einem der Ansprüche 1 bis 7 programmiert ist.

10. Steuergerät für ein Kraftstoffeinspritzsystem (100), insbesondere einer Brennkraftmaschine, **dadurch gekennzeichnet, dass** es zur Durchführung des Verfahrens nach einem der Ansprüche 1 bis 7 ausgebildet ist.
